# EUROPÄISCHE PATENTSCHRIFT

(11) **EP 0 461 359 B1**
(45) Veröffentlichungstag und Bekanntmachung des Hinweises auf die Patenterteilung: **02.03.1994**
(21) Anmeldenummer: 91105931.9
(22) Anmeldetag: 13.04.1991
(51) Int. Cl.: B60K 37/00

(54) **Anordnung von Bedienelementen von Fahrzeugkomponenten**
Arranging of control elements of vehicle components
Dispositif d'éléments de commande d'appareils dans des véhicules

(30) Priorität: 02.06.1990 DE 4017897
(43) Veröffentlichungstag der Anmeldung: 18.12.1991
(73) Patentinhaber: MERCEDES-BENZ AG, 70327 Stuttgart (DE)
(72) Erfinder: Mutschler, Jürgen, W-7559 Au am Rhein (DE); Seidenfaden, Gerd, W-7250 Leonberg (DE); Tomforde, Johann, W-7032 Sindelfingen - 6 (DE); Seeger, Wilhelm, W-7270 Nagold (DE)

(56) Entgegenhaltungen:
- WO-A-83/03159
- DE-A- 3 628 333
- US-A- 4 024 368
- US-A- 4 218 603

## Beschreibung

Die Erfindung betrifft eine Anordnung von Bedienelementen von Fahrzeugkomponenten gemäß dem Oberbegriff des Patentanspruches 1.

Es ist bereits eine gattungsgemäße Anordnung von Bedienelementen von Fahrzeugkomponenten bekannt, DE-A-36 28 333, wonach bei Betätigen eines einer Fahrzeugkomponente zugeordneten Bedienelementes auf einem Display eine symbolische Darstellung der einzustellenden Funktionen der eingeschalteten Fahrzeugkomponente erscheint. Den einzustellenden Funktionen sind am Rand des Displays Bedienelemente zugeordnet, mittels welchen eine Funktion ausgewählt und auf dem Display zur Darstellung gebracht werden kann. Die Bedienelemente, welche als Schalter ausgebildet sind, weisen ein Betätigungsteil auf, welches mit einem aus lichtleitendem Material bestehenden Teil als "Sichtfenster" teilweise das Display übergreift. Dadurch kann das Betätigungsteil von dem in dem übergreifenden Bereich hellgetasteten Display beleuchtet und dessen Auffinden erleichtert werden.

Des weiteren ist eine Anordnung von Bedienelementen von Fahrzeugkomponenten aus der EP-A-0448984 (Stand der Technik nach Art.54(3)EPÜ) bekannt, wonach bei der Bedienung mehrerer Fahrzeugkomponenten Darstellungen der entsprechenden Fahrzeugkomponenten auf einem Display erfolgen. Die Bedienung der Fahrzeugkomponenten erfolgt dann mittels einer Fernbedienung, in die die Tastatur integriert ist. Durch Drücken einer der Fahrzeugkomponentenauswahltasten auf der Tastatur wird die entsprechende Fahrzeugkomponente ausgewählt. Mit dieser Auswahl einer Fahrzeugkomponente wird auf dem Display eine symbolische Darstellung der entsprechenden Fahrzeugkomponente ausgegeben. Diese symbolische Darstellung beinhaltet eine Zuordnung von Fahrzeugkomponenten-spezifischen Einstellmöglichkeiten zu bestimmten Tasten der Tastatur. Gemeinsame Einstellmöglichkeiten der Fahrzeugkomponenten werden dabei an jeweils derselben Stelle des Bildschirms in jeweils derselben Darstellungsform angezeigt. Dabei sind Tasten vorgesehen, die eine unveränderliche Funktion ausführen.

Aus der GB-PS 1 187 985 ist es weiterhin bekannt, zu in einer Reihe angeordneten Schaltern in Abhängigkeit von den Schaltern zugeordneten Funktionen in unmittelbarer Nähe zu den Schaltern die entsprechenden Skalenteilungen anzuzeigen. Es ist dabei vorgesehen, daß die Anzeige unterschiedlicher Skalenteilungen angezeigt wird, indem vom Benutzer durch unmittelbaren manuellen Eingriff die jeweiligen Skalenteilungen sichtbar gemacht werden.

Des weiteren ist es aus der DE 37 36 116 C2 bekannt, ein Schaltelement und ein Leuchtelement in unmittelbarer räumlicher Zuordnung zueinander anzuordnen. Dabei wird auf den zu den einzelnen Schaltern gehörenden Leuchtelementen eine Information aufgebracht, die unveränderlich angezeigt wird.

Daraus ergibt sich als Nachteil, daß keine Anpassung der Anzeige an die entsprechende Fahrzeugkomponente erfolgt.

Aufgabe der Erfindung ist es, eine Anordnung von Bedienelementen von Fahrzeugkomponeten derart auszubilden, daß eine möglichst einfache Bedienung der Fahrzeugkomponenten gewährleistet ist.

Diese Aufgabe wird bei einer gattungsgemäßen Anordnung von Bedienelementen von Fahrzeugkomponenten erfindungsgemäß mit den kennzeichnenden Merkmalen des Anspruchs 1 gelöst, wobei die Merkmale der Unteransprüche vorteilhafte Aus- und Weiterbildungen kennzeichnen.

Erfindungsgemäß wird die die Bedienelemente von Fahrzeugkomponenten enthaltende Tastatur in das Display integriert. Dabei ist das Display bei einem Personenkraftwagen in besonders vorteilhafter Weise in dem vorderen Bereich der Mittelkonsole angebracht. Auf diesem Display werden die einzustellenden Funktionen der Fahrzeugkomponenten vorzugsweise am Rand dargestellt. In unmittelbarer räumlicher Nähe zu diesen einzustellenden Funktionen der Fahrzeugkomponenten sind dabei die Schalter bzw. Regler - vorzugsweise Schieberegler - auf der Oberfläche des Display angebracht. Diese Anbringung erfolgt dabei so, daß bei der Bedienung dieser Schalter und Regler ein Ansprechen für den Benutzer deutlich spürbar ist.

Ein Ausführungsbeispiel der Erfindung ist in der Zeichnung schematisch dargestellt und wird im folgenden näher beschrieben. Es zeigen:
- Fig. 1:: eine mögliche Anordnung von Schaltern und Reglern auf dem Display,
- Fig. 2:: eine erste Möglichkeit zur Anbringung der Schalter auf dem Display,
- Fig. 3:: eine zweite Möglichkeit zur Anbringung der Schalter auf dem Display,
- Fig. 4:: eine dritte Möglichkeit zur Anbringung der Schalter auf dem Display und
- Fig. 5:: eine vierte Möglichkeit zur Anbringung der Schalter auf dem Display.

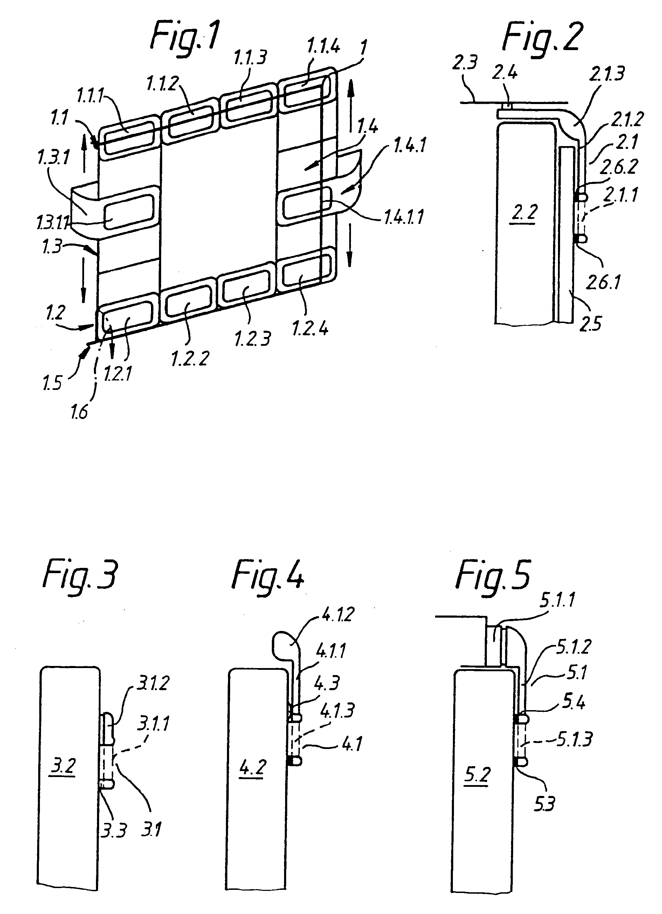

Wie aus Fig. 1 ersichtlich, werden auf dem Display 1 entsprechend der momentan eingeschalteten Fahrzeugkomponente verschiedene einzustellende Funktionen dargestellt. Ist die momentan eingeschaltete Fahrzeugkomponente beispielsweise das Radio, werden in der Zeile 1.1 als einzustellende Funktionen beispielsweise die Wellenlängenhereiche dargestellt. An der Stelle 1.1.1 erscheint dann das Schriftbild "UKW", an der Stelle 1.1.2 erscheint dann das Schriftbild "MW", an der Stelle 1.1.3 erscheint dann das Schriftbild "KW" und an der Stelle 1.1.4 erscheint dann das Schriftbild "LW". In der Zeile 1.2 werden dann bei dem Radio als eingeschalteter Fahrzeugkomponente als einzustellende Funktionen an der Stelle 1.2.1 das Schriftbild "ARI", an der Stelle 1.2.2 das Schriftbild "EQUAL", an der Stelle 1.2.3 eine symbolische graphische Darstellung des Balancereglers und an der Stelle 1.2.4 das Schriftbild "LISTE" angezeigt. Auf den Stellen 1.1.1-1.1.4 der Zeile 1.1 sowie den Stellen 1.2.1-1.2.4 der Zeile 1.2 des Display 1 sind dabei Sichtfenster angebracht, so daß bei einer anderen eingeschalteten Fahrzeugkomponente als dem Radio die dieser dann eingeschalteten Fahrzeugkomponente zugeordneten einzustellenden Funktionen sichtbar werden. In unmittelbarer räumlicher Nähe zu diesen Sichtfenstern sind dann die den entsprechenden einzustellenden Funktionen zugeordneten Schalter angebracht, so daß eine eindeutige Zuordnung der auf dem Display 1 angebrachten Schalter zu den einzustellenden Funktionen gewährleistet ist. Ebenso ist es möglich, in den beiden Reihen 1.3 und 1.4 am Rand des Display weitere Stellen vorzusehen, an denen einzustellende Funktionen der eingeschalteten Fahrzeugkomponente sichtbar gemacht werden, um somit auch für diese einzustellenden Funktionen zu der Anzeige auf dem Display eine unmittelbare Zuordnung zu den entsprechenden Schaltern zu treffen. Bei dem in Fig. 1 dargestellten Ausführungsbeispiel sind allerdings für alle Fahrzeugkomponenten in den beiden Reihen 1.3 und 1.4 einzustellende Funktionen dargestellt, die zweckmäßigerweise analog einstellt werden. Zur Einstellung dieser einzustellenden Funktionen sind deshalb Schieber 1.3.1 und 1.4.1 vorgesehen, bei deren Verschiebung nach oben beziehungsweise unten die entsprechende einzustellende Funktion entsprechend dem in den Sichtfenstern 1.3.1.1 und 1.4.1.1 erscheinenden Wert geändert wird. Beispielsweise ist es möglich, bei einem Radiogerät, einem Cassettenspielgerät, einem CD-Spielgerät, einem Fernsehgerät, einem Videogerät und einem Telefon mittels des Schiebers 1.4.1 die Lautstärke zu verändern. Der Schieber 1.3.1 kann dann beispielsweise als Balanceregler für den Klang verwendet werden. Ist die eingeschaltete Komponente beispielsweise die Klimaanlage des Fahrzeuges, kann mittels des Schiebers 1.3.1 die Temperatur vorgegeben werden.

Da die Schalter und Schieber der Zeilen 1.1, 1.2 und Reihen 1.3, 1.4 einen Teil des Displays 1 bedecken, der somit beispielsweise bei einer Verwendung des Displays 1 als Bildschirm eines TV oder Video-Gerätes nicht mehr bzw. nur noch bedingt zur Verfügung steht, werden in einer besonders vorteilhaften Ausführungsform die Schalter und Schieber entsprechend der Darstellung der Zeile 1.1 und der Reihe 1.4 außermittig am Rand des Displays 1 versetzt. Das heißt dann beispielsweise bei der Reihe 1.1, daß das Sichtfenster des der Stelle 1.1.1 zugeordneten Betätigungsteiles sich im rechten unteren Rand dieses Betätigungsteiles befindet. Entsprechend gilt dann entsprechend dem Ausführungsbeispiel der Fig. 1, daß sich die Sichtfenster der den Stellen 1.1.2, 1.1.3 zugeordneten Betätigungsteile im unteren Rand der Betätigungsteile befinden und daß sich das Sichtfenster des der Stelle 1.1.4 zugeordneten Betätigungsteiles im linken unteren Rand des Betätigungsteiles befindet. Es ist entsprechend der Darstellung der Reihe 1.2 auch möglich, die Betätigungsteile mittels einer Klappvorrichtung 1.5 in Richtung des Pfeiles 1.6 aus dem Bereich des Displays 1 herauszuklappen, so daß dadurch die nutzbare Fläche des Displays 1 vergrößert wird, wenn die Bedienelemente nicht benötigt werden. Selbstverständlich ist es auch möglich, die beiden beschriebenen Maßnahmen der außermittigen Versetzung der Bedienelemente sowie die Anbringung einer Klappvorrichtung 1.5 zu kombinieren.

Entsprechend der Darstellung der Fig. 2 ergibt sich eine erste Möglichkeit zur Anbringung der Bedienelemente 2.1 auf dem Display 2.2, bei der das Display 2.2 an einem Rahmen 2.3 befestigt ist. Mittels eines Federelementes 2.4 ist das Bedienelement 2.1 ebenfalls an dem Rahmen 2.3 befestigt. Das Bedienelement 2.1 besteht dabei aus einem Sichtfenster 2.1.1 und einem Betätigungsteil 2.1.2. Das Sichtfenster 2.1.1 des Bedienelementes 2.1 ist durchsichtig. Hinter diesem Sichtfenster 2.1.1 erscheint dann die in Fig. 1 beschriebene Information an einer der Stellen 1.1.1-1.1.4 oder 1.2.1-1.2.4. Das Betätigungsteil 2.1.2 des Bedienelementes 2.1 wirkt dabei auf ein Touchpanel 2.5 ein. Dabei dreht sich das gesamte Bedienelement 2.1 bei Betätigung an dem Betätigungsteil 2.1.2 um den Drehpunkt 2.1.3. Dabei wird durch das Betätigungsteil 2.1.2 des Bedienelementes 2.1 ein Druck auf das Touchpanel 2.5 an der Stelle ausgeübt, die der in dem Sichtfenster 2.1.1 sichtbaren einzustellenden Funktion zugeordnet ist. Das Sichtfenster 2.1.1 ist dabei durch elastische Abdichtungen 2.6.1 und 2.6.2 gegen das Touchpanel 2.5 gelagert.

Eine zweite Möglichkeit zur Anbringung der Bedienelemente 3.1 auf dem Display 3.2 zeigt Fig. 3. Dabei besteht das Bedienelement 3.1 aus einem Sichtfenster 3.1.1 und einem an dem Display befestigten Schalter 3.1.2, der beispielsweise aufgeklebt sein kann. Außerdem ist noch eine Abdichtung 3.3 zwischen dem Sichtfenster 3.1.1 und dem Display 3.2 vorhanden. Hinter dem Sichtfenster 3.1.1 erscheint dabei auf dem Display 3.2 eine symbolische Darstellung der durch den Schalter 3.1.2 einzustellenden Funktion.

Fig. 4 ist eine dritte Möglichkeit zu entnehmen, die Bedienelemente 4.1 auf dem Display 4.2 anzubringen. Bei Betätigen des Betätigungsteiles 4.1.1 des Bedienelementes 4.1 dreht sich das Bedienelement 4.1 um den Drehpunkt 4.1.2. Dadurch wird ein Schalter 4.3 betätigt. Durch das Sichtfenster 4.1 ist dabei die entsprechende auf dem Display 4.2 dargestellte einzustellende Funktion sichtbar. Das Sichtfenster 4.1.3 ist dabei durch eine elastische Abdichtung 4.4 gegen das Display 4.2 gelagert.

Entsprechend der Darstellung der Fig. 5 kann der Schalter 5.1.1 des Bedienelementes 5.1 auch außerhalb des Displays 5.2 angebracht sein. Durch ein Sichtfenster 5.1.3 des Bedienelementes 5.1 sichtbar erscheint dann auf dem Display 5.2 die durch Betätigung des Betätigungsteiles 5.1.2 des Bedienelementes 5.1 einzustellende Funktion. Dabei ist das Sichtfenster 5.1.3 durch Abdichtungen 5.3 und 5.4 gegen das Display 5.2 gelagert.

## Patentansprüche

1. Anordnung von Bedienelementen (2.1,3.1,4.1,5.1) von Fahrzeugkomponenten,
- wobei durch Betätigen von einem Betätigungsteil (2.1.2,3.1.2,4.1.1,5.1.2) eines Bedienelementes eine der Fahrzeugkomponenten eingeschaltet wird,
- worauf auf einem Display (1,2.2,3.2,4.2,5.2) eine symbolische Darstellung der eingeschalteten Fahrzeugkomponente erfolgt,
- wobei die symbolische Darstellung einzustellende Funktionen der eingeschalteten Fahrzeugkomponente beinhaltet und Informationen über die momentane Einstellung liefert,
- wobei jeweils identische einzustellende Funktionen der Fahrzeugkomponenten an jeweils demselben Ort des Displays in jeweils identischer Weise dargestellt werden,
- wobei Fahrzeugkomponenten-spezifische einzustellende Funktionen der Fahrzeugkomponenten jeweils Fahrzeugkomponentenspezifisch an einem definierten Ort des Display dargestellt werden,
- wobei eine definierte Zuordnung der einzustellenden Funktionen der Fahrzeugkomponenten zu Betätigungsteilen (2.1.2,3.1.2, 4.1.1, 5.1.2) von Bedienelementen (2.1,3.1,4.1,5.1) besteht,
- wobei die Bedienelemente der einzustellenden Funktionen an jeweils dem Ort des Displays angebracht sind, an dem die symbolische Darstellung der einzustellenden Funktion auf dem Display erscheint,
- wobei die Bedienelemente zumindest teilweise aus Betätigungsteilen und Sichtfenstern (2.1.1, 3.1.1, 4.1.3, 5.1.3) bestehen,
- wobei bei Betätigen eines der Betätigungsteile der Bedienelemente für den Benutzer eine haptische Rückkopplung für das Ansprechen des Schalters (2.5, 3.1.2, 4.3, 5.1.1) der einzustellenden Funktion gegeben ist,
**dadurch gekennzeichnet**,
daß durch das Sichtfenster (2.1.1, 3.1.1, 4.1.3, 5.1.3) die auf dem Display (1, 2.2, 3.2, 4.2, 5.2) dargestellte und durch das jeweilige Betätigungsteil (2.1.2, 3.1.2, 4.1.1, 5.1.2) des Bedienelementes (2.1, 3.1, 4.1, 5.1) einzustellende Funktion sichtbar ist.

2. Anordnung von Bedienelementen von Fahrzeugkomponenten nach Anspruch 1,
**dadurch gekennzeichnet**,
daß die Bedienelemente (2.1, 3.1, 4.1, 5.1) am oberen und am unteren Rand des Displays (1, 2.2, 3.2, 4.2, 5.2) angeordnet sind und daß am rechten und am linken Rand des Displays (1, 2.2, 3.2, 4.2, 5.2) Schieber (1.3.1, 1.4.1) zur Einstellung der Funktionen der Fahrzeugkomponenten vorhanden sind, die analog eingestellt werden, wobei diese Schieber (1.3.1, 1.4.1) Sichtfenster (1.3.1.1, 1.4.1.1) aufweisen, durch die die Darstellung der momentanen Einstellung der entsprechenden Funktion der Fahrzeugkomponente auf dem Display (1, 2.2, 3.2, 4.2, 5.2) sichtbar ist.

3. Anordnung von Bedienelementen von Fahrzeugkomponenten nach einem der Ansprüche 1 oder 2,
**dadurch gekennzeichnet**,
daß die Betätigungsteile (2.1.2, 3.1.2, 4.1.1, 5.1.2) der Bedienelemente (2.1, 3.1, 4.1, 5.1) den äußeren Rand des Displays (1, 2.2, 3.2, 4.2, 5.2) darstellen und daß die zu den Betätigungsteilen (2.1.2, 3.1.2, 4.1.1, 5.1.2) gehörenden Sichtfenster (2.1.1, 3.1.1, 4.1.3, 5.1.3) in Richtung Mittelpunkt des Display (1, 2.2, 3.2, 4.2, 5.2) angebracht sind.

4. Anordnung von Bedienelementen von Fahrzeugkomponenten nach einem der Ansprüche 1 bis 3,
**dadurch gekennzeichnet**,
daß die Betätigungsteile (2.1.2, 3.1.2, 4.1.1, 5.1.2) unmittelbar als elektrische Schalter (3.1.2) ausgebildet sind.

5. Anordnung von Bedienelementen von Fahrzeugkomponenten nach einem der Ansprüche 1 bis 3,
**dadurch gekennzeichnet**,
daß die Betätigungsteile (2.1.2, 3.1.2, 4.1.1, 5.1.2) auf ein Touchpanel (2.5) einwirken.

6. Anordnung von Bedienelementen von Fahrzeugkomponenten nach einem der Ansprüche 1 bis 5,
**dadurch gekennzeichnet**,
daß die Bedienelemente (2.1, 3.1, 4.1, 5.1) und/oder Schieber (1.3.1, 1.4.1) über den Rand des Displays (1, 2.2, 3.2, 4.2, 5.2) herausragen und daß die Sichtfenster (2.1.1, 3.1.1, 4.1.3, 5.1.3) der Bedienlemente (2.1, 3.1, 4.1, 5.1) und/oder Schieber (1.3.1, 1.4.1) außermittig derart versetzt sind, daß sie sich über den entsprechenden Stellen des Displays (1, 2.2, 3.2, 4.2, 5.2) befinden, an denen die symbolische Darstellung der einzustellenden Funktion sichtbar wird.

7. Anordnung von Bedienelementen von Fahrzeugkomponenten nach einem der Ansprüche 1 bis 6,
**dadurch gekennzeichnet**,
daß sich an den Bedienelementen (2.1, 3.1, 4.1, 5.1) und/oder Schiebern (1.3.1, 1.4.1) eine Klappvorrichtung (1.5) befindet, mittels derer die Bedienelemente (2.1, 3.1, 4.1, 5.1) und/oder Schieber (1.3.1, 1.4.1) derart schwenkbar (1.6) sind, daß die zur Verfügung stehende Fläche des Displays (1, 2.2, 3.2, 4.2, 5.2) vergrößert wird.

## Claims

1. Arrangement of operating controls (2.1, 3.1, 4.1, 5.1) of vehicle components,
- in which one of the vehicle components is switched on by operating an operating part (2.1.2, 3.1.2, 4.1.1, 5.1.2) of an operating control,
- whereupon the vehicle component switched on is symbolically represented on a display (1, 2.2, 3.2, 4.2, 5.2),
- the symbolic representation containing functions to be adjusted for the vehicle component switched on and supplying information on the current adjustment,
- identical functions to be adjusted for the vehicle components in each case being represented at the same location of the display in each case in identical manner in each case,
- vehicle component-specific functions to be adjusted for the vehicle components in each case being represented vehicle component-specifically at a defined location on the display,
- in which arrangement there is a defined association between the functions to be adjusted for the vehicle components and the operating parts (2.1.2, 3.1.2, 4.1.1, 5.1.2) of operating controls (2.1, 3.1, 4.1, 5.1),
- in which the operating controls of the functions to be adjusted are mounted at in each case the location on the display at which the symbolic representation of the function to be adjusted appears on the display,
- in which the operating controls at least partially consist of operating parts and viewing windows (2.1.1, 3.1.1, 4.1.3, 5.1.3),
- in which, when one of the operating parts of the operating controls is operated, a haptic feedback for the response of the switch (2.5, 3.1.2, 4.3, 5.1.1) of the function to be adjusted is given for the user,
characterized in that
- the function to be adjusted by the respective operating part (2.1.2, 3.1.2, 4.1.1, 5.1.2) of the operating control (2.1, 3.1, 4.1, 5.1) and represented on the display (1, 2.2, 3.2, 4.2, 5.2) is visible through the viewing window (2.1.1, 3.1.1, 4.1.3, 5.1.3).

2. Arrangement of operating controls of vehicle components according to Claim 1, characterized in that the operating controls (2.1, 3.1, 4.1, 5.1) are arranged at the upper edge and at the lower edge of the display (1, 2.2, 3.2, 4.2, 5.2) and that sliders (1.3.1, 1.4.1) for adjusting the functions of the vehicle components, which are adjusted by analog means, are present at the right-hand and at the left-hand edge of the display (1, 2.2, 3.2, 4.2, 5.2), these sliders (1.3.1, 1.4.1) exhibiting viewing windows (1.3.1.1, 1.4.1.1) through which the representation of the current adjustment of the corresponding function of the vehicle component is visible on the display (1, 2.2, 3.2, 4.2, 5.2).

3. Arrangement of operating controls of vehicle components according to one of Claims 1 or 2, characterized in that the operating parts (2.1.2, 3.1.2, 4.1.1, 5.1.2) of the operating controls (2.1, 3.1, 4.1, 5.1) represent the outer edge of the display (1, 2.2, 3.2, 4.2, 5.2) and that the viewing windows (2.1.1, 3.1.1, 4.1.3, 5.1.3) belonging to the operating parts (2.1.2, 3.1.2, 4.1.1, 5.1.2) are mounted in the direction of the centre of the display (1, 2.2, 3.2, 4.2, 5.2).

4. Arrangement of operating controls of vehicle components according to one of Claims 1 to 3, characterized in that the operating parts (2.1.2, 3.1.2, 4.1.1, 5.1.2) are directly constructed as electrical switches (3.1.2).

5. Arrangement of operating controls of vehicle components according to one of Claims 1 to 3, characterized in that the operating parts (2.1.2, 3.1.2, 4.1.1, 5.1.2) act on a touch panel (2.5).

6. Arrangement of operating controls of vehicle components according to one of Claims 1 to 5, characterized in that the operating controls (2.1, 3.1, 4.1, 5.1) and/or sliders (1.3.1, 1.4.1) protrude over the edge of the display (1, 2.2, 3.2, 4.2, 5.2) and in that the viewing windows (2.1.1, 3.1.1, 4.1.3, 5.1.3) of the operating controls (2.1, 3.1, 4.1, 5.1) and/or sliders (1.3.1, 1.4.1) are offset outside the centre in such a manner that they are located above the corresponding locations of the display (1, 2.2, 3.2, 4.2, 5.2) at which the symbolic representation of the function to be adjusted becomes visible.

7. Arrangement of operating controls of vehicle components according to one of Claims 1 to 6, characterized in that at the operating controls (2.1, 3.1, 4.1, 5.1) and/or sliders (1.3.1, 1.4.1), a folding device (1.5) is located by means of which the operating controls (2.1, 3.1, 4.1, 5.1) and/or sliders (1.3.1, 1.4.1) can be pivoted (1.6) in such a manner that the available area of the display (1, 2.2, 3.2, 4.2, 5.2) is enlarged.

## Revendications

1. Agencement d'éléments de commande (2.1, 3.1, 4.1, 5.1) de composants d'un véhicules,
- suivant lequel l'actionnement d'un organe de manoeuvre (2.1.2, 3.1.2, 4.1.1, 5.1.2) d'un élément de commande enclenche l'un des composants du véhicule,
- à la suite de quoi une représentation symbolique du composant enclenché du véhicule apparaît sur un affichage (1, 2.2, 3.2, 4.2, 5.2),
- suivant lequel la représentation symbolique contient des fonctions des composants enclenchés du véhicule qui doivent être réglées et délivre des informations concernant le réglage momentané,
- suivant lequel des fonctions identiques des composants du véhicule qui doivent être réglées sont représentées au même emplacement de l'affichage et de manière identique,
- suivant lequel des fonctions des composants du véhicule qui sont spécifiques à ces composants du véhicule et qui doivent être réglées sont représentées de manière spécifique aux composants du véhicule en un emplacement défini de l'affichage,
- suivant lequel il existe une affectation définie des fonctions des composants du véhicule qui doivent être réglées à des organes de manoeuvre (2.1.2, 3.1.2, 4.1.1, 5.1.2) d'éléments de commande (2.1, 3.1, 4.1, 5.1),
- suivant lequel chacun des éléments de commande des fonctions devant être réglées est placé en un emplacement de l'affichage auquel la représentation symbolique de la fonction devant être réglée apparaît sur l'affichage,
- suivant lequel les éléments de commande consistent au moins partiellement en organes de manoeuvre et en voyants (2.1.1, 3.1.1, 4.1.3, 5.1.3),
- suivant lequel, lors de l'actionnement de l'un des organes de manoeuvre des éléments de commande, l'utilisateur reçoit une réaction haptique de la réponse du commutateur (2.5, 3.1.2, 4.3, 5.1.1) de la fonction devant être réglée,
caractérisé en ce que la fonction devant être réglée par l'organe particulier de manoeuvre (2.1.2, 3.1.2, 4.1.1, 5.1.2) de l'élément de commande (2.1, 3.1, 4.1, 5.1) et représentée sur l'affichage (1, 2.2, 3.2, 4.2, 5.2) est visible à travers le voyant (2.1.1, 3.1.1, 4.1.3, 5.1.3).

2. Agencement d'éléments de commande de composants de véhicule selon la revendication 1, caractérisé en ce que les éléments de commande (2.1, 3.1, 4.1, 5.1) sont disposés sur le bord supérieur et sur le bord inférieur de l'affichage (1, 2.2, 3.2, 4.2, 5.2) et en ce que des curseurs (1.3.1, 1.4.1) de réglage des fonctions des composants du véhicule se trouvent sur le bord droit et sur le bord gauche de l'affichage (1, 2.2, 3.2, 4.2, 5.2), ces curseurs (1.3.1, 1.4.1) se réglant de manière analogique et comportant des voyants (1.3.1.1, 1.4.1.1) par lesquels la représentation du réglage momentané de la fonction correspondante du composant du véhicule est visible sur l'affichage (1, 2.2, 3.2, 4.2, 5.2).

3. Agencement d'éléments de commande de composants de véhicule selon l'une des revendications 1 ou 2, caractérisé en ce que les organes de manoeuvre (2.1.2, 3.1.2, 4.1.1, 5.1.2) des éléments de commande (2.1, 3.1, 4.1, 5.1) représentent le bord extérieur de l'affichage (1, 2.2, 3.2, 4.2, 5.2) et en ce que les voyants (2.1.1, 3.1.1, 4.1.3, 5.1.3) appartenant aux organes de manoeuvre (2.1.2, 3.1.2, 4.1.1, 5.1.2) sont disposés vers le centre de l'affiche (1, 2.2, 3.2, 4.2, 5.2).

4. Agencement d'éléments de commande de composants de véhicule selon l'une des revendications 1 à 3, caractérisé en ce que les organes de manoeuvre (2.1.2, 3.1.2, 4.1.1, 5.1.2) sont constitués directement de commutateurs électriques (3.1.2).

5. Agencement d'éléments de commande de composants de véhicule selon l'une des revendications 1 à 3, caractérisé en que les organes de manoeuvre (2.1.2, 3.1.2, 4.1.1, 5.1.2) agissent sur un panneau de contact à effleurement (2.5).

6. Agencement d'éléments de commande de composants de véhicule selon l'une des revendications 1 à 5, caractérisé en que les éléments de commande (2.1, 3.1, 4.1, 5.1) et/ou les curseurs (1.3.1, 1.4.1) débordent du bord de l'affichage (1, 2.2, 3.2, 4.2, 5.2) et en ce que les voyants (2.1.1, 3.1.1, 4.1.3, 5.1.3) des éléments de commande (2.1, 3.1, 3.1, 5.1) et/ou les curseurs (1.3.1, 1.4.1) sont décalés de façon à être excentrés de manière qu'ils se trouvent aux emplacements correspondants de l'affichage (1, 2.2, 3.2, 4.2, 5.2) auxquels la représentation symbolique de la fonction devant être réglée est rendue visible.

7. Agencement d'éléments de commande de composants de véhicule selon l'une des revendications 1 à 6, caractérisé en ce qu'un dispositif pivotant (1.5) se trouvant sur les éléments de commande (2.1, 3.1, 4.1, 5.1) et/ou sur les curseurs (1.3.1, 1.4.1) permet de faire pivoter (1.6) les éléments de commande (2.1, 3.1, 4.1, 5.1) et/ou les curseurs (1.3.1, 1.4.1) de manière que la surface disponible de l'affichage (1, 2.2, 3.2, 4.2, 5.2) soit agrandie..
